# EUROPEAN PATENT SPECIFICATION

(11) **EP 2 340 930 B1**
(45) Date of publication and mention of the grant of the patent: **06.05.2020**
(21) Application number: 10397524.9
(22) Date of filing: 14.12.2010
(51) Int. Cl.: B32B 5/02, B32B 5/18, B32B 5/22, B32B 5/24, B32B 5/26, B32B 5/30, B32B 3/04, F16L 59/02

(54) **METHOD FOR MANUFACTURING MINERAL FIBRE COMPOSITE PRODUCT**
VERFAHREN ZUR HERSTELLUNG EINES MINERALFASERVERBUNDPRODUKTS
PROCÉDÉ DE FABRICATION D'UN PRODUIT COMPOSITE À BASE DE FIBRES MINÉRALES

(30) Priority: 23.12.2009 FI 20096395
(43) Date of publication of application: 06.07.2011
(73) Proprietor: Paroc Group Oy, 00181 Helsinki (FI)
(72) Inventor: Peltola, Jenni, 20610, Turku (FI); Bergman, Niklas, 21600, PARGAS (FI); Fagerlund, Johanna, 21600, PARGAS (FI); Lehtinen, Niina, 20100, Turku (FI); Fellman, Jacob, 21600, Pargas (FI); Rantanen, Beatrice, 21600, Pargas (FI)
(74) Representative: LEITZINGER OY

(56) References cited:
- WO-A1-2007/144451
- DE-A1- 3 346 180
- US-A- 5 786 059

## Description

The object of the present invention is to provide a mineral fibre composite product with enhanced insulation properties and an improved method for manufacturing it. More precisely the composite material contains aerogel material layers and primary mineral fibre layers. The method according to the invention is defined by claim 1 and comprises manufacturing of two separate primary mineral fibre webs and adding of the aerogel material between the primary webs.

Mineral wool has been manufactured for a good 100 years. Its general properties and above all its isolating capacity have made it into a standard material with almost innumerable fields of application. From an economical and the users view the isolating capacity is undoubtedly the most essential property. Despite the good properties there is however a need for improving insulation capacity of the final products. Aerogel seems to be today's answer to that need. Aerogel is a low-density, solid-state material with extremely efficient thermal insulation properties. When considering the utilization of the aerogel materials as (building/ construction) insulation materials their property known as friability causes problems in this respect. Also properties like dustiness, poor mechanical stability, brittleness, non-flexibility and fragility narrow the applicability of an aerogel in the field of insulation. Thus it is almost necessary to combine aerogel with another material having the "missing" properties to obtain an ideal insulation material. The composite products comprising aerogel material are known from the prior art and are disclosed in several patent publications like US 6,316,092; US 2006/0125158; US 6,143,400, US 5,786,059; US 2,893,962; US 7,078,359 and US 2007/173157.

Document DE3 346 180 discloses a rigid thermal insulation body comprising reinforcing fibres with a length of more than 10 mm to suppress cracking of thermal insulation material based on microporous oxide aerogel.

The combination of mineral fibre material with the aerogel material is however not so simple, mainly due to the disadvantageous properties of the aerogel material. There exist several challenges which relate to the final composite product itself and also to the process for manufacturing the composite prod-uct. Thus, there is a need to improve certain aspects concerning the composite product and its manufacturing process.

The addition of aerogel material in granular or powder form to the product constitutes a problem, because the aerogel material causes unnecessary dusting, which leads to soiling of the production line and wearing of the conveyor belts and also to loss of material. With today's technique it is possible to add aerogel material into a composite mineral wool if the aerogel is already bonded in a felt or other device, but it is almost impossible to add it as a dry material, because of its low density and small size. The aerogel material will be spread in the surrounding of the production line and for example fine dust in the air will cause health problems in addition to the soiling. If the aerogel material is added with organic adhesive, the fire properties of the final product will get worse.

With today's pendulum technique it is also difficult to have aerogel material evenly distributed in the products without material getting on the surface layers of the slabs. If a single primary web is folded, the edges thereof must be left without added material or otherwise this material will appear on surface layers of the finished product.

A drawback with today's technique is also that the amount of aerogel material which is to be added if the desired enhancement of the insulation properties is to be achieved, will become very concentrated if only a part of the width of the primary web may be used for the purpose. Normally only about 60 % of the width may be used.

Additionally because finally divided material on the primary web prevents gluing together of the primary layers during the pendulum movement, the aerogel material has to be very coarse-grained in order to be able to add a sufficient amount. With today's technique the added material lies on the surface of the primary layer when it is subjected to a pendulum movement. The fibre web moves sideways during the pendulum movement with great speed, and all loose material that has been added is thrown outwards and falls on the side of the line with dusting and soiling as a result. Fine material dusts and flies around whereas coarse material is thrown far out of the line.

It has now surprisingly been found that the above mentioned problems, i.e. dusting, poor adhesion and uneven distribution of the aerogel material, appearance of the aerogel material on the surface(s) of the final composite product and problems relating to the maximization of the amount of aerogel material, may be overcome by the process according to the present invention, which is characterized in that there before the two separate primary mineral fibre webs are joined in order to form an intermediate mineral fibre composite web is added aerogel material onto the surface of at least one of the primary mineral fibre webs in the space between said primary webs (i.e. onto the inner surface(s) of the primary web(s)) over the needed width of the at least one primary mineral fibre web. Thus, the method and arrangement disclosed in the patent publication WO 2007/144451 (Paroc Oy Ab) is utilized to add aerogel material in the mineral fibre product.

With the present method the aerogel material is added on the primary mineral fibre web(s) in a place, which can easily be closed at the sides. Also the movement of the primary webs draws the aerogel material with them. Furthermore said two primary mineral fibre webs with the aerogel material there between are pressed together before the pendulum movement, so that the wool layers are glued together in a better way and the aerogel material does not get thrown out during the pendulum movement. Thus the dusting is remarkably reduced during all these manufacturing steps.

With the present method added aerogel material may be evenly distributed over the essentially whole primary mineral fibre web surface, without appearing or showing on the surfaces (upper or lower) of the final product. This means that the usable surface area is about 20% to 50 % higher compared to previous techniques, which leads to that the material does not need to be so coarse.

The assembled fibre web is affected during the continued conveying and pendulum movement by the movement which causes aerogel material to penetrate in between the fibres. This causes the adhesion to the wool becoming much better than if the aerogel material would be lying on the surface. Therefore, due to the present invention, the amount of aerogel material can be higher and/or the particle size thereof may be smaller without the splitting strength of the product deteriorating. The distribution of the aerogel material becomes more homogeneous and also the material will situate closer to the surface of the final slab.

The following calculation example shows how the material is distributed. If one according today's technique manufactures a slab with 10 layers or plies, one may add material only between them, i.e. 9 separate material layers, even if the material is added onto both surfaces of the primary layer. The distance from the surface to the first material layer will thus become 1/10 of the thickness of the final slab. With the aid of the technique in the present invention one gets 10 double layers with one layer of added material in each layer, i.e. 10 separate material layers and the distance from the surface to the first material layer becomes 1/20 of the thickness of the final slab.

As disclosed above the prior art problems concerning both the final composite mineral fibre product and its manufacturing process, especially dusting problems, can be solved by the present invention and an insulation product with excellent properties is obtained.

The arrangement to be used in the method according to the present invention comprises two collecting drums for collection of the stream of mineral fibres into two primary mineral fibre webs, and at least one supply element for supplying aerogel material is arranged between the two primary mineral fibre webs being brought against each other. The supply element(s) of the arrangement is/are preferably situated between the collection drums and the place where the joining into an intermediate mineral fibre composite web i.e. intermediate composite web occurs.

In the following the method for manufacturing and the product according to the invention will be described in more detail with reference to the following drawings in which
Fig. 1 is an exemplary schematic side view of a production line to be used in the method according to the present invention,
Fig. 2 shows schematically an embodiment of adding aerogel material
Fig. 3 is an exemplary schematic view of an intermediate composite product according to the invention

In the method according to the invention the mineral material is melt in the melt oven 1, from which it is conveyed along melt groove 8 to a fibrating aggregate 2, wherein the fibres are formed by a spinning wheel 9. Then the formed fibre stream 5 is directed towards the collecting device 3, which comprises two collecting drums 11 and 12. The formed two primary mineral fibre webs 4a and 4b are separately conveyed by conveyers 15a and 14a and further by conveyors 15b and 14b respectively for the addition of an aerogel material as well as for joining them into an intermediate (mineral fibre) composite web 13. The intermediate web 13 is then folded with a folding device 6 onto a receiving belt 7 in movement. The folding device 6 comprises two parallel conveyor belts 16 and 17 and the pendulum movement is provided by a crank mechanism driven by a motor (not shown in the figure) connected to the lower part of the folding machine 6. As the aerogel layer is situated in the middle of the primary mineral webs 4a and 4b the transport belts 16 and 17 will not be worn out or soiled. The unitary and cohesive mat is obtained by compressing the folded intermediate web. The compression method to be used is known from the prior art.

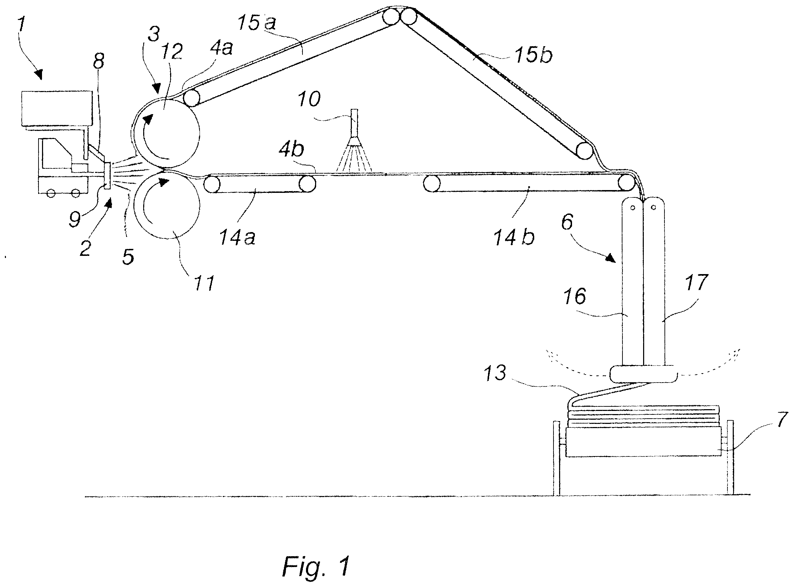

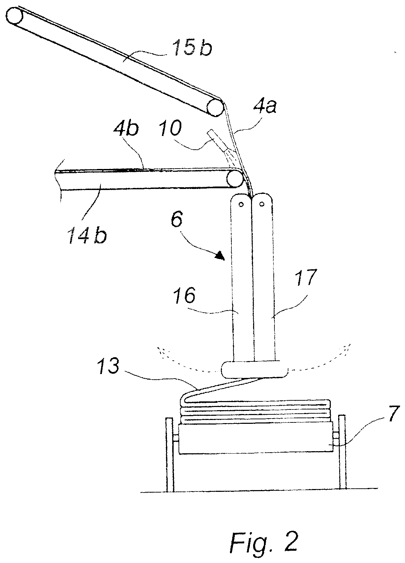

There are several ways, as regards the addition method as well as the place of addition, to add the aerogel material on the surface of the at least one primary mineral fibre web. The aerogel material can be added by blowing, spurting, spraying, sprinkling and/or by aid of acoustic energy. In the embodiment shown in figure 1, the aerogel material is added on the lower primary mineral fibre web 4b by the addition means for the aerogel material 10. In figure 2 is shown another alternative way to add the aerogel material from one aerogel nozzle 10 at the same time to the inner surfaces of the both primary webs 4a and 4b. The addition means for aerogel material 10 is directed so that it sprouts aerogel material onto the inner surfaces of both primary webs in a position where the primary webs are approaching each other just before they are joined into an intermediate mineral fibre web. The addition means for the aerogel material 10, shown in figures 1 and 2 is a spraying device essentially comprised of a spraying nozzle, which can be of many types. The aerogel material may also be added such that it is sprayed separately with two separate nozzles against the opposite sides (inner surfaces) of the two adjacent primary mineral fibre webs (not shown in figures). The aerogel material is preferably added between the collection drums and the joining of the primary mineral fibre webs into an intermediate composite web. The added aerogel material may be in a granular or in a dry powder form.

In the method according to the invention the aerogel material is added in a place, which can easily be closed at its sides. The closing of the aerogel addition step will reduce dusting so that even granular or powder form aerogel material can be added to the mineral material.

According to a preferred embodiment of the present invention the aerogel material is added onto the surface of the at least one primary mineral fibre web over its essentially whole width, i.e. the aerogel is added onto the upper surface of the lower web 4b and/or onto the lower surface of the upper web 4a. In this case "essentially whole width" means that the aerogel material is added on the surface(s) of the primary web(s) so that in principal the number of aerogel layers throughout the final product is the same in order to obtain even and homogeneous insulation product, where the aerogel layers are almost parallel to the products major surfaces. Therefore the length of the edge area without aerogel material depends for example on the way of folding. By leaving the edge areas without aerogel, the primary mineral webs (the outer webs) contact each other at the both edges, so that the aerogel material stays between the outer webs and cannot be thrown away, even during the pendulum movement.

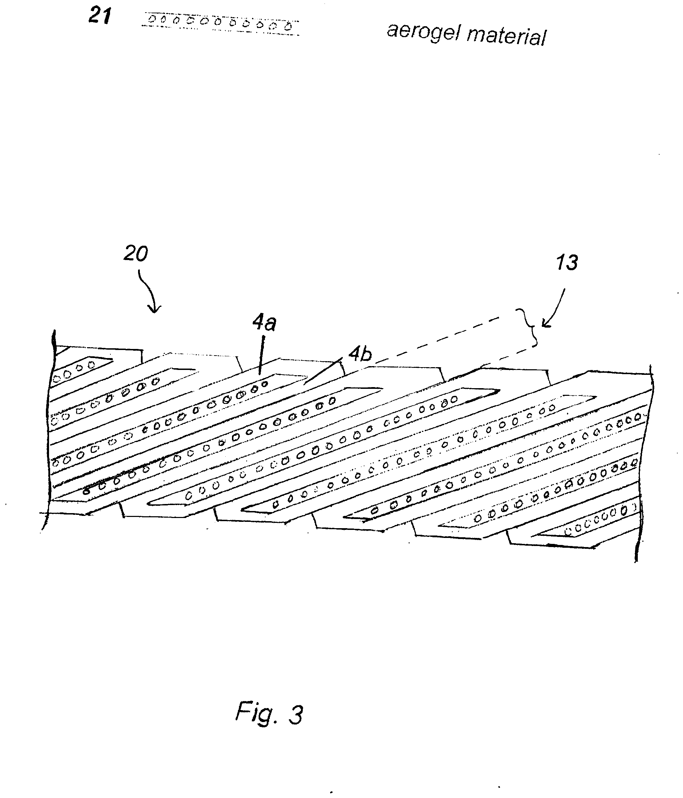

In Figure 3 is shown a schematic side view of an intermediate composite product 20 manufactured according to the process of the invention being ready to be compressed and finished into a final mineral wool composite product of a slab format. The intermediate composite web 13 having outer mineral fibre layers 4a and 4b and an inner aerogel layer 21 is folded on top of itself so that each folded composite layer 13 at least partially covers the previous folded layer so that the final mineral wool composite product in the direction of its thickness comprises for example ten compressed folded layers (mineral fibre layers and aerogel layers) on top of each other. As can be seen from figure 3 the edge portions of the primary web(s) 4a and/or 4b have been left without aerogel material and thus, the mineral fibre webs 4a and 4b contact each other at those regions and keep the aerogel material in place.

It is although possible according to another embodiment of the invention that the intermediate composite web contains, between its outer mineral fibre webs, an aerogel material layer distributed only over at least one longitudinal region, which to its width at least partially extends over the width of the primary mineral fibre web in question from at least one of the lateral edges of the primary mineral fibre web in question. Thus the aerogel material can for example be distributed in two separate longitudinal regions, whereof one of the regions in the lateral direction of the primary mineral fibre web concerned extends itself from one of the lateral edges and the other region in the lateral direction of the primary mineral fibre web in question extends itself from the other lateral edge of the primary mineral fibre web in question in towards the middle of the primary mineral fibre web in question over a distance which is less than half of the width of the primary mineral fibre web in question, preferably 1/4 to 1/3 part of the whole width of said primary mineral fibre web.

In this context aerogel material means any kind of an aerogel material that has the properties required in the utilization of the above described process. In the following the term aerogel is used as a general term covering all different aerogel forms obtainable by different drying conditions; such as aerogels, cryogels and xerogels.

The mineral wool composite product according to the present invention having an upper and a lower surface, two side edges and two end edges, and comprising intermediate mineral fibre composite webs 13 folded at least partially on top of each other and compressed has in the said intermediate mineral fibre composite web 13 an aerogel layer 21 between two primary mineral fibre webs 4a and 4b.

In the composite mineral fibre product the aerogel material is preferably in a granular form but it may also be in a powder form.

In a preferred embodiment the composite mineral wool product contains aerogel material 10-50%, preferably 20-50% and more preferably 25-40% by volume of the finished product.

In one embodiment the aerogel material is concentrated in one or several regions between the middle and the outer surface of the mineral wool composite product, preferably in regions situated at distance of 5 - 20 % of the thickness of the mineral wool composite product from the outer surface of said mineral wool product in the direction of its thickness.

For embodiments of the process and the product according to the invention further applies: aerogel material layers are preferably essentially planar and lie in the same plane as the large surfaces of the final product. Therefore no cold bridges are formed through which the heat might escape. The primary webs may also be of different thickness if so desired.

The advantages of the invention are:
- dusting is reduced
- an aerogel material is obtained in between the primary mineral fibre webs
- surface layers of the final product will not be deteriorated by added aerogel material which easily might detach
- aerogel material at least partly penetrates within the mineral fibres and therefore the adhesion to the wool becomes better
- layers in the final product are kept together in a better manner, which results in that reduced particle sizes of the added material may be used
- conveyor belts are worn and soiled less when the aerogel material is added between the primary webs.

## Claims

1. A method for manufacturing a mineral fibre composite product, comprising the steps of
a) melting the mineral material in a melt oven, conveying the melted material along a melt groove to a fibrating aggregate and subsequently forming the fibres by a spinning wheel,
b) forming two primary mineral fibre webs, which are separately conveyed by conveyors,
c) adding an aerogel material in granular form between the primary mineral fibre webs,
d) joining the primary mineral fibre webs to an intermediate (mineral fibre) composite web and
e) folding with a folding device, the device comprising two parallel conveyor belts and a pendulum movement is provided with a crank mechanism driven by a motor, connected to the folding machine, whereby during the pendulum movement the aerogel material penetrates in between the fibres, and
f) compressing the folded intermediate web into a unitary mat.

2. The method according to claim 1, wherein the amount of aerogel material is 10-50%, preferably 20-50% and more preferably 25-40% by volume of the finished product.

3. The method according to claim 1 or 2, wherein the aerogel material is added essentially over the whole width of at least one of the primary mineral fibre webs.

## Patentansprüche

1. Verfahren zum Herstellen eines Mineralfaser-Verbundproduktes, das die folgenden Schritte umfasst:
a) Schmelzen des Mineralmaterials in einem Schmelzofen, Transportieren des geschmolzenen Materials entlang einer Schmelzrinne zu einer Zerfaserungsanlage und anschließend Bilden der Fasern durch ein sich drehendes Rad,
b) Bilden von zwei primären Mineralfaservliesen, die separat durch die Transporteinrichtungen transportiert werden,
c) Hinzusetzen eines Aerogelmaterials in körniger Form zwischen den primären Mineralfaservliesen,
d) Verbinden der primären Mineralfaservliese zu einem intermediären (Mineralfaser-)Verbundvlies, und
e) Falten mit einer Faltvorrichtung, wobei die Vorrichtung zwei parallele Transportbänder umfasst, und eine Pendelbewegung wird mit einem Kurbelmechanismus bereitgestellt, der von einem Motor angetrieben wird, verbunden mit der Faltmaschine, wodurch während der Pendelbewegung das Aerogelmaterial zwischen den Fasern eindringt, und
f) Komprimieren des gefalteten intermediären Vlieses zu einer einheitlichen Matte.

2. Verfahren nach Anspruch 1, wobei die Menge an Aerogelmaterial 10-50 %, vorzugsweise 20-50 % und am besten 25-40 Volumen-% des Fertigproduktes beträgt.

3. Verfahren nach Anspruch 1 oder 2, wobei das Aerogelmaterial im Wesentlichen über die gesamte Breite von mindestens einem der primären Mineralfaservliese zugesetzt wird.

## Revendications

1. Procédé de fabrication d'un produit composite en fibres minérales, comprenant les étapes suivantes :
a) fusion du matériau minéral dans un four de fusion convoyant le matériau fondu le long d'une gorge de fusion jusqu'à un agrégat de fibrage puis formage des fibres par un rouet,
b) formage de deux bandes de fibres minérales primaires qui sont convoyées séparément par des convoyeurs,
c) ajout d'un matériau à base d'aérogel sous forme granulaire entre les bandes de fibres minérales primaires,
d) jonction des bandes de fibres minérales primaires en une bande composite intermédiaire (en fibres minérales) et
e) pliage au moyen d'une plieuse, le dispositif comprenant deux courroies transporteuses parallèles et un mouvement pendulaire étant généré au moyen d'un mécanisme de manivelle entraîné par un moteur connecté à la plieuse, sachant que, pendant le mouvement pendulaire, le matériau à base d'aérogel pénètre entre les fibres, et
f) compression de la bande intermédiaire pliée en une natte unitaire.

2. Procédé selon la revendication 1, dans lequel la quantité de matériau à base d'aérogel représente 10 à 50 %, de préférence 20 à 50 %, et plus préférentiellement 25 à 40 % du volume du produit fini.

3. Procédé selon la revendication 1 ou 2, dans lequel le matériau à base d'aérogel est ajouté sensiblement sur toute la largeur d'au moins une des bandes de fibres minérales primaires.
